# EUROPEAN PATENT APPLICATION

(11) **EP 4 557 719 A1**
(43) Date of publication of application: **21.05.2025**
(21) Application number: 23872716.8
(22) Date of filing: 29.06.2023
(51) Int. Cl.: H04N 7/15, H04N 21/2662, H04N 21/431, H04N 5/272, A63B 71/06, G06Q 50/10, G06T 19/00, G06T 13/40, G06T 19/20, G06V 40/20

(54) **DISPLAY DEVICE AND METHOD FOR OPERATING SAME**

(30) Priority: 29.09.2022 KR 20220124664; 06.12.2022 KR 20220169110
(71) Applicant: Samsung Electronics Co., Ltd., Suwon-si, Gyeonggi-do 16677 (KR)
(72) Inventor: LEE, Jaehwang, Suwon-si, Gyeonggi-do 16677 (KR); KIM, Myungjae, Suwon-si, Gyeonggi-do 16677 (KR); SEO, Yoojin, Suwon-si, Gyeonggi-do 16677 (KR)
(74) Representative: Gulde & Partner
(86) International application number: PCT/KR2023/009130
(87) International publication number: WO 2024/071590

(57) **Abstract**

A display device according to an embodiment may include a communication unit, a display, a memory storing one or more instructions, and at least one processor configured to execute the one or more instructions, wherein the at least one processor executes the one or more instructions to obtain a first user image captured of a first user, control the communication unit to transmit capability information about the display device to a server, receive, from the server, information about a configuration method of a group service determined based on the capability information, obtain a first avatar image and a second avatar image corresponding to a user of another display device, based on the received information, and control the display to display a group image including the first avatar image and the second avatar image.

## Description

### Technical Field

Various embodiments relate to a display device capable of displaying a user image as an avatar image in a non-face-to-face group service, and an operating method of the display device.

### Background Art

Recently, non-face-to-face services have increased in line with the era of non-face-to-face contact, and non-face-to-face group services that allow a plurality of users to participate together remotely have increased. In particular, due to increased interest in health, home fitness services that guide people to exercise in personal spaces have been actively launched.

Existing home fitness services involve a method of watching and following various guided exercise videos from a trainer or a method of conducting group fitness by using a video conference system.

In the case of conducting group fitness by using a video conference system, an image of a user captured through a camera may be shared with other users, which may cause problems in the protection of personal privacy. In particular, a user may not want to share their appearance (for example, their face or workout outfit) with other users when exercising with strangers.

Accordingly, a method is required to provide a non-face-to-face group service in which a plurality of users may participate together while protecting the privacy of individual users.

### Disclosure of Invention

### Solution to Problem

A display device according to an embodiment may include a communication unit, a display, a memory storing one or more instructions, and at least one processor executing the one or more instructions.

The at least one processor may obtain a first user image captured of a first user by executing the one or more instructions.

The at least one processor may control the communication unit to transmit capability information of the display device to a server by executing the one or more instructions.

The at least one processor may receive information about a configuration method of a group service determined based on the capability information from the server by executing the one or more instructions.

The at least one processor may obtain a first avatar image and a second avatar image corresponding to a user of another display device based on the received information by executing the one or more instructions.

The at least one processor may control the display device to display the group image including the first avatar image and the second avatar image by executing the one or more instructions.

An operating method of a display device according to an embodiment may include obtaining a first user image captured of a first user.

The operating method of the display device according to an embodiment may include transmitting capability information of the display device to a server.

The operating method of the display device according to an embodiment may include receiving information about a configuration method of a group service determined based on the capability information from the server.

The operating method of the display device according to an embodiment may include obtaining the first avatar image and a second avatar image corresponding to a user of another display device based on the received information.

The operating method of the display device according to an embodiment may include displaying a group image including the first avatar image and the second avatar image.

### Brief Description of Drawings

FIG. 1 is a diagram showing a group service providing system according to an embodiment.
FIG. 2 is a flowchart illustrating a method by which a server determines a configuration method of a group service, according to an embodiment.
FIG. 3 is a flowchart illustrating a method by which a display device determines a service configuration method, according to an embodiment.
FIG. 4 is a flowchart illustrating an operating method of a plurality of display devices when a group service configuration method is determined on a device basis, according to an embodiment.
FIG. 5 is a diagram showing operations of a plurality of display devices when the configuration of a group service is on a device basis, according to an embodiment.
FIG. 6 is a diagram showing an example of a user interface screen for setting avatar information, according to an embodiment.
FIG. 7 is a flowchart illustrating an operating method of a plurality of display devices when a group service configuration method is determined on a device basis, according to an embodiment.
FIG. 8 is a diagram showing operations of a plurality of display devices when the configuration of a group service is on a device basis, according to an embodiment.
FIG. 9 is a flowchart illustrating operating methods of a plurality of display devices and a server when a service configuration method is determined on a server basis, according to an embodiment.
FIG. 10 is a flowchart illustrating operating methods of a plurality of display devices and a server when a group service configuration method is determined on a server basis, according to an embodiment.
FIG. 11 is a block diagram showing the configuration of a display device according to an embodiment.
FIG. 12 is a block diagram showing the configuration of a display device according to an embodiment.
FIG. 13 is a block diagram showing the configuration of a server according to an embodiment.

### Mode for the Invention

Terms used in the present specification are briefly explained, and the present disclosure is described in detail.

Terms used in the present disclosure were selected from the most widely used general possible terms while considering the functions of the present disclosure, but the terms may vary depending on the intention or precedents of those skilled in the art, the emergence of new technologies, or the like. In addition, in certain cases, there are terms arbitrarily selected by the applicant, and in such cases, the meanings of the terms are described in detail in the description of the relevant disclosure. Accordingly, terms used in the present disclosure should be defined based on the meanings of the terms and the overall content of the present disclosure, rather than being simply defined based on the names of the terms.

Throughout the specification, when a portion "includes" an element, another element may be further included, rather than excluding the existence of the other element, unless otherwise described. In addition, terms such as "...unit," "module", or the like described in the specification may mean a unit that processes at least one function or operation, which may be implemented as hardware or software, or a combination of hardware and software.

Hereinafter, embodiments are described in detail with reference to the accompanying drawings so that those skilled in the art may easily implement the present disclosure. However, the present disclosure may be implemented in various different forms and is not limited to the embodiments described herein. Also, in the drawings, parts unrelated to the explanation are omitted to clearly explain the present disclosure, and like reference numerals in the drawings denote like elements.

In the embodiments of the present specification, the term "user" means a person who controls a system, a function, or an operation, and may include a developer, an administrator, or an installer.

In addition, in the embodiments of the present specification, 'image' or 'picture' may refer to a still image, a moving image composed of a plurality of consecutive still images (or frames), or a video.

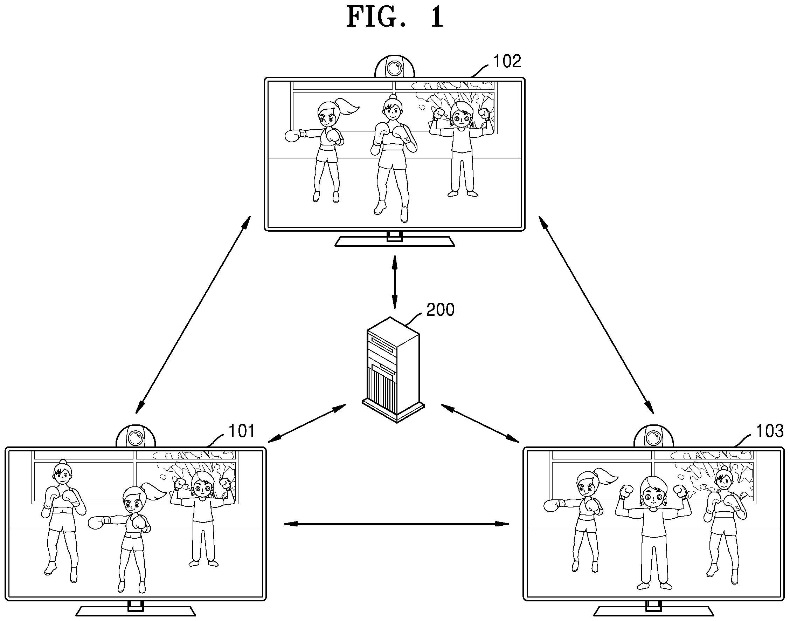

FIG. 1 is a diagram showing a group service providing system according to an embodiment.

Referring to FIG. 1, the group service providing system according to an embodiment may include a server 200 and a plurality of display devices 101, 102, and 103. The plurality of display devices 101, 102, and 103 according to an embodiment may be devices connected to a group service. The group service according to an embodiment may be a service that provides a group activity in which a plurality of users may participate together in a non-face-to-face method.

The plurality of display devices 101, 102, and 103 connected to the group service may share user images with each other. Each of the plurality of display devices 101, 102, and 103 may display one group image including user images of the plurality of display devices 101, 102, and 103.

Each of the plurality of display devices 101, 102, and 103 according to an embodiment may be a device for displaying an image by processing an image signal, and may be a device including a display.

Each of the plurality of display devices 101, 102, and 103 according to an embodiment may be implemented in various forms, such as a television (TV) including a display, a smart monitor, a mobile phone, a smart phone, a tablet personal computer (PC), a digital camera, a camcorder, a laptop computer, a desktop, an electronic book terminal, a digital broadcasting terminal, a personal digital assistant (PDA), a navigation device, an MP3 player, a digital video disk (DVD) player, a wearable device, a video wall, a digital signage, a digital information display (DID), a projector display, a refrigerator, a washing machine, or the like. In addition, each of the plurality of display devices 101, 102, and 103 may be a fixed electronic device arranged at a fixed location or a mobile electronic device having a portable form, and may be a digital broadcasting receiver capable of receiving digital broadcasts. However, the disclosure is not limited thereto.

As shown in FIG. 1, when the group service is a server that provides group fitness, the plurality of display devices 101, 102, and 103 may capture exercise images of respective users and provide the exercise images of a plurality of users as a single group image. Accordingly, users of the plurality of display devices may conduct home fitness in a non-face-to-face method while sharing their own exercise images as well as the exercise images of other users.

At this time, the exercise image of the user may not include an image captured of an actual user, but may include an avatar image in which an avatar generated based on the image captured of the actual user moves.

In case the exercise images of the plurality of users included in a group fitness screen are displayed as images captured of the actual users, some users may not want to show their faces, workout outfits, or the like to other users. Accordingly, the privacy of the individuals may be protected by displaying the exercise images of the users included in the group fitness screen as avatar images.

The avatar image according to an embodiment may be an image that moves like an actual user based on an image captured of the user. The server 200 or the plurality of display devices 101, 102, and 103 according to an embodiment may detect an object (for example, the user) in an image captured of the user, obtain tracking information of the detected object, and generate an avatar image based on the tracking information.

Meanwhile, the server 200 according to an embodiment may determine whether the configuration of the group service is on a server basis or a device basis based on capability information of the plurality of display devices 101, 102, and 103. For example, the server 200 may determine whether an operation of generating an avatar image will be performed by the server 200 (server-based service configuration) or by each of the plurality of display devices 101, 102, and 103 (device-based service configuration).

When it is determined to configure a service on a server basis, each of the plurality of display devices 101, 102, and 103 may transmit an image captured of the user (a user image) or information about the user image to the server 200.

The server 200 according to an embodiment may generate an avatar image corresponding to the user image based on the user image or the information about the user image received from each of the plurality of display devices 101, 102, and 103. The server 200 may generate a single group image including avatar images corresponding to the users or the plurality of devices and transmit the generated group image to the plurality of display devices 101, 102, and 103.

The plurality of display devices 101, 102, and 103 may display the single group image including avatar images corresponding to the plurality of users, which is received from the server 200.

Alternatively, when it is determined to configure a service on a device basis, each of the plurality of display devices 101, 102, and 103 may generate an avatar image corresponding to a user image based on the user image from each of the plurality of display devices 101, 102, and 103 without going through the server 200. In addition, each of the plurality of display devices 101, 102, and 103 may transmit generated avatar images to other display devices. Each of the plurality of display devices 101, 102, and 103 may generate and display a single group image including the avatar images generated by the display devices and avatar images received from other display devices. However, the disclosure is not limited thereto.

A method by which a display device according to an embodiment obtains a single group image including an avatar image of a user of the display device and an avatar image of a user of another display device is described below in detail with reference to the accompanying drawings.

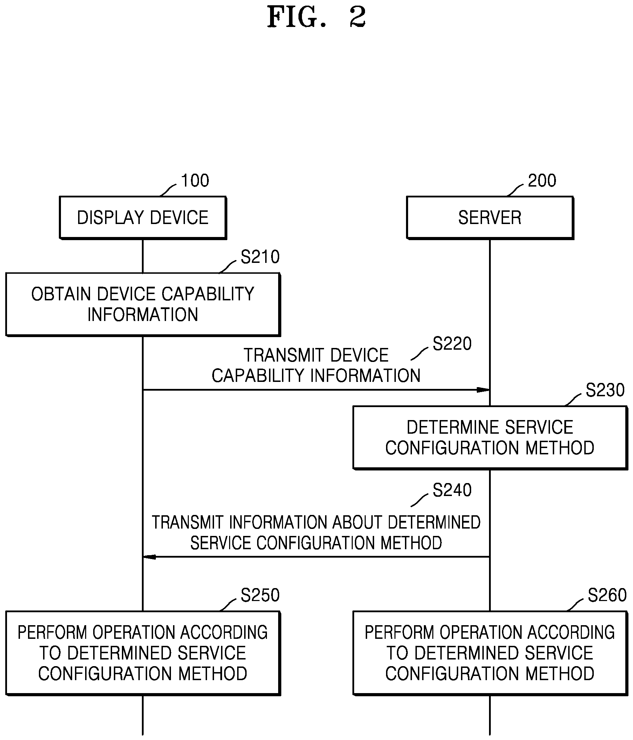

FIG. 2 is a flowchart illustrating a method by which a server determines a configuration method of a group service, according to an embodiment.

A display device 100 according to the embodiment of FIG. 2 may be any one of the plurality of display devices 101, 102, and 103 of FIG. 1.

Referring to FIG. 2, the display device 100 according to an embodiment may obtain device capability information (S210). For example, the device capability information may include at least one of: type information, capacity information, information about the number of cores and performance information, with respect to at least one processor included in the display device 100; and type information, capacity information and performance information, with respect to memory included in the display device 100.

The display device 100 may store the device capability information in advance. The display device 100 may transmit the device capability information stored in advance to the server 200 when receiving a request for the device capability information from the server 200 (S220).

The server 200 may receive the device capability information from the display device 100 and determine a configuration method of a group service based on the received device capability information (S230).

For example, the server 200 may store policy information (service determination policy information) for determining a service configuration method. The service determination policy information may include criteria for device specifications (for example, type information, capacity information, information about the number of cores and performance information, with respect to a processor, and type information, capacity information and performance information, with respect to memory) required to perform an operation included in a group service, such as generating an avatar on a device, or the like. However, the disclosure is not limited thereto.

In addition, the service determination policy information may vary depending on the number of concurrent users connected to the server, network situation, or the like. In addition, the service determination policy information may also be changed as functions provided by the group service are changed. However, the disclosure is not limited thereto.

The server 200 may determine whether the configuration of the group service is on a device basis or a server basis based on the device capability information and the service determination policy information.

In addition, the server 200 may determine the configuration method of the group service by considering the capability information of other display devices connected to the group service. For example, when the device specifications of some display devices connected to the group service meet the criteria required to perform an operation included in the group service, such as generating an avatar or the like, but the device specifications of the remaining display devices fail to meet the criteria, the server 200 may determine the configuration method of the group service on a server basis to suit the display devices with low specifications. However, the disclosure is not limited thereto.

The server 200 may transmit information about the determined service configuration method to the display device 100 (S240).

The display device 100 and the server 200 according to an embodiment may perform operations according to the determined service configuration method (S250, S260).

For example, when the configuration of the group service is on a device basis, the display device 100 according to an embodiment may generate a first avatar image for a user image captured of the user and transmit the generated first avatar image to another display device. In addition, the display device 100 may receive a second avatar image for a user of another display device from the other display device. The display device 100 may generate and display a group image including the first avatar image and the second avatar image.

On the contrary, when the configuration of the group service is on a server basis, the display device 100 according to an embodiment may transmit a user image captured of the user or information about the user image to the server 200, and the server 200 may generate a first avatar image based on the user image or the information about the user image. In addition, the server 200 may generate a second avatar image by receiving a user image of a user of another display device or information about the user image from the other display device. The server 200 may generate a group image including the first avatar image and the second avatar image and transmit the generated group image to the display devices. The display devices may display the group image received from the server 200.

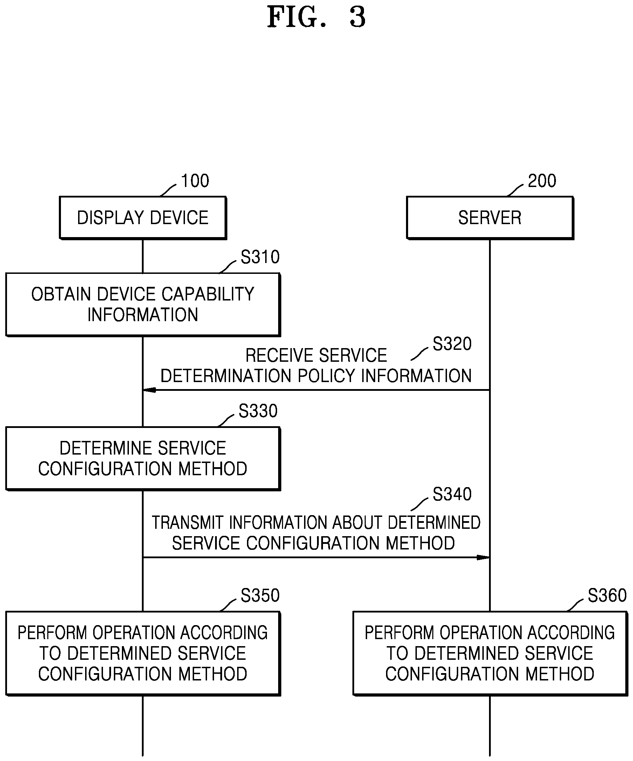

FIG. 3 is a flowchart illustrating a method by which a display device determines a service configuration method, according to an embodiment.

The display device 100 according to the embodiment of FIG. 3 may be any one of the plurality of display devices 101, 102, and 103 of FIG. 1.

Referring to FIG. 3, the display device 100 according to an embodiment may obtain device capability information (S310). For example, the device capability information may include at least one of: type information, capacity information, information about the number of cores and performance information with respect to at least one processor included in the display device 100; and type information, capacity information and performance information, with respect to memory included in the display device 100.

The display device 100 may store the device capability information in advance.

The display device 100 according to an embodiment may receive service determination policy information from the server 200 (S320).

For example, the server 200 may store the service determination policy information for determining a service configuration method. The service determination policy information may include criteria for device specifications (for example, type information, capacity information, information about the number of cores and performance information, with respect to a processor, and type information, capacity information and performance information, with respect to memory) required to perform an operation included in a group service, such as generating an avatar on a device, or the like. However, the disclosure is not limited thereto.

In addition, the service determination policy information may vary depending on the number of concurrent users connected to the server, network situation, or the like. In addition, the service determination policy information may also be changed as functions provided by the group service are changed. However, the disclosure is not limited thereto.

The server 200 may transmit the service determination policy information to the display device 100 when receiving a request for the service determination policy information from the display device 100. However, the disclosure is not limited thereto.

The display device 100 according to an embodiment may determine a configuration method of a service based on the device capability information and the service determination policy information (S330).

For example, the display device 100 may determine whether the configuration of the group service is on a device basis or a server basis, and may transmit information about the determined service configuration method to the server 200 (S340).

The display device 100 and the server 200 according to an embodiment may perform operations according to the determined service configuration method (S350, S360).

For example, when the configuration of the group service is on a device basis, the display device 100 may generate a first avatar image for a user image captured of the user and transmit the generated first avatar image to another display device. In addition, the display device 10 may receive a second avatar image for a user of another display device from the other display device. The display device 100 may generate and display a group image including the first avatar image and the second avatar image.

On the contrary, when the configuration of the group service is on a server basis, the display device 100 according to an embodiment may transmit a user image captured of the user or information about the user image to the server 200, and the server 200 may generate a first avatar image based on the user image or the information about the user image. In addition, the server 200 may generate a second avatar image by receiving a user image of a user of another display device or information about the user image from the other display device. The server 200 may generate a group image including the first avatar image and the second avatar image and transmit the generated group image to the display devices. The display devices may display the group image received from the server 200.

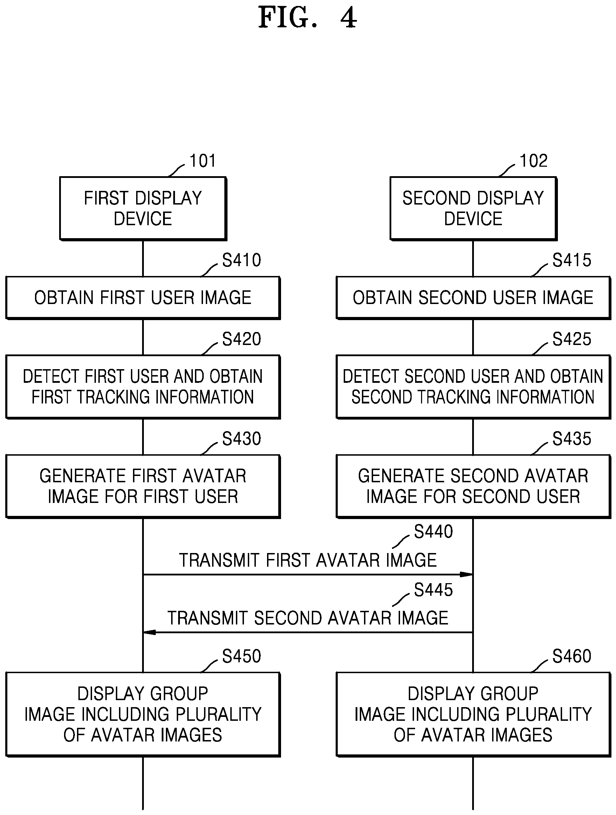

FIG. 4 is a flowchart illustrating an operating method of a plurality of display devices when a group service configuration method is determined on a device basis, according to an embodiment.

The plurality of display devices according to an embodiment may include a first display device 101 and a second display device 102. The plurality of display devices may be devices connected to a group service.

Referring to FIG. 4, the first display device 101 according to an embodiment may obtain a first user image captured of a user of the first display device (a first user) by using a camera (S410). At this time, the camera may be a camera mounted on the first display device 101 or a camera connected to the first display device 101 via wired or wireless communication.

The first display device 101 according to an embodiment may detect an object (for example, the first user) from the first user image and obtain information (first tracking information) about the first user (S420).

For example, the first display device 101 may detect the first user by analyzing the first user image by using an object detection module. The object detection module may include a suitable logic, circuit, interface, and/or code that enables detection of a particular object included in an image captured by the camera. The object detection module may detect the first user by analyzing the first user image by using at least one of machine learning, a neural network, or a deep learning algorithm as a rule-based or artificial intelligence algorithm.

In addition, the first display device 101 may obtain the first tracking information by using a tracking module. The tracking module may include a suitable logic, circuit, interface, and/or code capable of tracking a movement of a particular object included in an image captured by the camera. The tracking module may obtain movement information of the first user from the first user image by using at least one of machine learning, a neural network, or a deep learning algorithm as a rule-based or artificial intelligence algorithm.

For example, the tracking module may estimate a pose of the first user, identify a particular body part (for example, face, hand, or the like) of the first user based on the estimated pose, and detect a movement with respect to the identified particular body part in more detail.

However, the object detection module and the tracking module described above are only examples, and the first display device 101 according to an embodiment may detect the first user from the first user image and obtain the first tracking information through various methods.

The first display device 101 according to an embodiment may generate a first avatar image corresponding to the first user image (S430).

The first display device 101 may generate the first avatar image based on avatar information set by the user and the first tracking information obtained in S420. At this time, the first avatar image may be an image that moves in correspondence to the first user in the first user image.

The first display device 101 according to an embodiment may transmit the first avatar image to the second display device 102 (S440).

In addition, the second display device 102 according to an embodiment may obtain a second user image captured of a user of the second display device (a second user) by using a camera (S415). At this time, the camera may be a camera mounted on the second display device 102 or a camera connected to the second display device 102 via wired or wireless communication.

In addition, the second display device 102 may detect an object (for example, the second user) from the second user image and obtain tracking information (second tracking information) about the second user (S425).

For example, the second display device 102 may detect the second user by analyzing the second user image by using an object detection module. In addition, the second display device 102 may obtain the second tracking information by using a tracking module.

The descriptions of the object detection module and the tracking module are given in detail in S420, and thus detailed descriptions thereof are omitted. However, the object detection module and the tracking module are only examples, and the second display device 102 according to an embodiment may detect the second user from the second user image and obtain the second tracking information through various methods.

The second display device 102 according to an embodiment may generate a second avatar image corresponding to the second user image (S435).

The second display device 102 may generate the second avatar image based on the avatar information set by the second user and the second tracking information obtained in S425. At this time, the second avatar image may be an image that moves in correspondence to the second user in the second user image.

The second display device 102 according to an embodiment may transmit the second avatar image to the first display device 101 (S445).

The first display device 101 according to an embodiment may generate and display a group image including the generated first avatar image and the second avatar image received from the second display device 102 (S450).

For example, the first display device 101 may divide a single screen into a plurality of areas including a first area and a second area, display the first avatar image in the first area, and display the second avatar image in the second area. At this time, the size of the first area may be greater than the sizes of other areas. In addition, the first area may be located at the center of the screen. Alternatively, the first display device 101 may generate a group image by combining the first avatar image and the second avatar image onto a background screen set by the first user. However, the disclosure is not limited thereto.

In addition, the second display device 102 according to an embodiment may generate and display a group image including the generated second avatar image and the first avatar image received from the first display device 101 (S460).

For example, the second display device 102 may divide a single screen into a plurality of areas including a first area and a second area, display the second avatar image in the first area, and display the first avatar image in the second area. At this time, the size of the first area may be greater than the sizes of other areas. In addition, the first area may be located at the center of the screen. Alternatively, the second display device 102 may generate a group image by combining the first avatar image and the second avatar image onto a background screen set by the second user. However, the disclosure is not limited thereto.

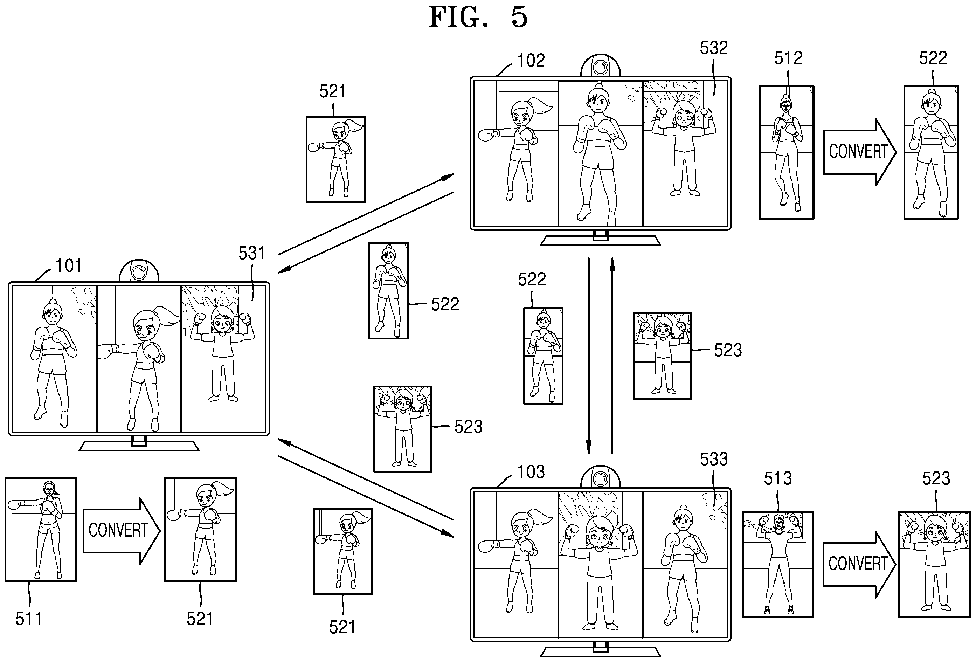

FIG. 5 is a diagram showing operations of a plurality of display devices when the configuration of a group service is on a device basis, according to an embodiment.

Referring to FIG. 5, the plurality of display devices according to an embodiment may include a first display device 101, a second display device 102, and a third display device 103. However, the disclosure is not limited thereto.

The first display device 101, the second display device 102, and the third display device 103 may be devices connected to a group service provided by the server 200. The first display device 101, the second display device 102, and the third display device 103 may be connected as a group based on respective pieces of identification information to be able to share user images with each other.

For example, the first to third display devices 101, 102, and 103 may each transmit user information to the server 200, and the server 200 may perform authentication on the first to third display devices 101, 102, and 103 based on the user information of each of the first to third display devices 101, 102, and 103. Accordingly, the first to third display devices 101, 102, and 103 may log in to the group fitness service.

In addition, the server 200 according to an embodiment may determine that an operation of generating an avatar image is performed by each of the first to third display devices 101, 102, and 103 based on the capability information of each of the first to third display devices 101, 102, and 103. Because this has been described in detail with reference to FIG. 2, a detailed description thereof is omitted.

Each of the first to third display devices 101, 102, and 103 may obtain an image captured of a user. For example, the first display device 101 may obtain a first user image 511 captured of the first user. The first display device 101 may detect the first user from the first user image 511 and obtain tracking information of the first user to generate a first avatar image 521.

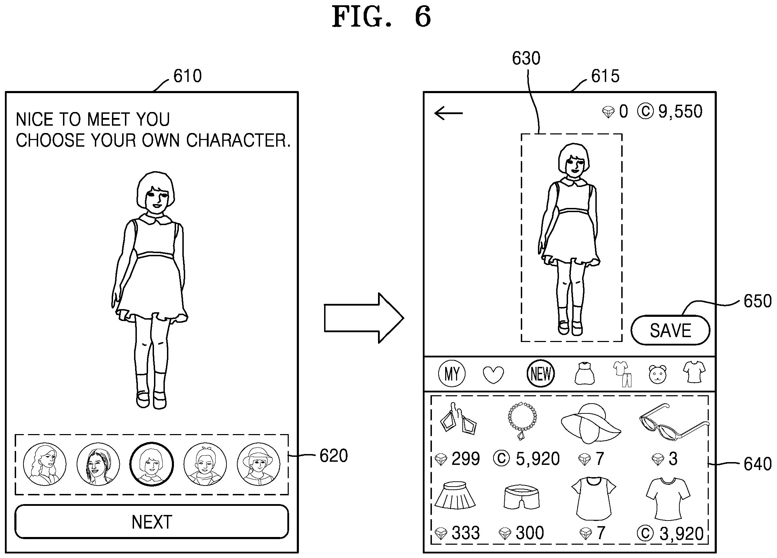

The first avatar image 521 may be generated as an image that moves identically to the first user of the first user image 511 based on avatar information set by the user. A method of setting avatar information is described in detail below with reference to FIG. 6.

FIG. 6 is a diagram showing an example of a user interface screen for setting avatar information, according to an embodiment.

Referring to FIG. 6, the first display device 101 may display a user interface screen (avatar setting screen) that may set avatar information.

As shown in FIG. 6, the first display device 101 may include a menu screen 610 that may set a basic character for an avatar. For example, the first display device 101 may display a list 620 including a plurality of characters with different genders, races, ages, or the like.

When the first display device 101 receives an input for selecting any one of the plurality of characters, the first display device 101 may display a selected character 630 and display a menu screen 615 that may set items related to the selected character.

The first display device 101 may display a list 640 including items that may decorate the selected character.

When the first display device 101 receives an input for selecting at least one of the plurality of items, the first display device 101 may display the selected character 630 applied with the selected at least one item.

The first display device 101 may save a final character as first avatar information about the first user based on a user input selecting a save button 650 included in the menu screen 615.

However, the user interface screen for setting avatar information illustrated in FIG. 6 is only an example, and the first display device 101 according to an embodiment may set first avatar information through various methods.

Referring to FIG. 5 again, the second display device 102 may obtain a second user image 512 captured of the second user. The second display device 102 may detect the second user from the second user image 512 and obtain tracking information of the second user. The second display device 102 may generate a second avatar image 522 based on the obtained tracking information of the second user. The second avatar image 522 may be generated based on avatar information set by the user and may be an image that moves identically to the second user detected from the second user image 512.

In addition, the third display device 103 may obtain a third user image 513 captured of a third user. The third display device 103 may detect the third user from the third user image 513 and obtain tracking information of the third user. The third display device 103 may generate a third avatar image 523 based on the obtained tracking information of the third user. The third avatar image 523 may be generated based on avatar information set by the user and may be an image that moves identically to the third user detected from the third user image 513.

Each of the first to third display devices 101, 102, and 103 may transmit the generated avatar image to other display devices.

Each of the first to third display devices 101, 102, and 103 may request the server 200 for identification information about other display devices connected to the group service and may receive identification information about the other display devices from the server 200.

Each of the first to third display devices 101, 102, and 103 may transmit the generated avatar image to the other display devices based on the received identification information about the other display devices.

For example, the first display device 101 may transmit the first avatar image 521 to the second and third display devices 102 and 103, receive the second avatar image 522 from the second display device 102, and receive the third avatar image 523 from the third display device 103.

In addition, the second display device 102 may transmit the second avatar image 522 to the first and third display devices 101 and 103, receive the first avatar image 521 from the first display device 101, and receive the third avatar image 523 from the third display device 103.

In addition, the third display device 103 may transmit the third avatar image 523 to the first and second display devices 101 and 102, receive the first avatar image 521 from the first display device 101, and receive the second avatar image 522 from the second display device 102.

The first display device 101 may generate and display a first group image 531 including the first avatar image 521, the second avatar image 522, and the third avatar image 523. The first group image 531 may be divided into three areas so that the second avatar image 522 may be displayed in a first area, the first avatar image 521 may be displayed in a second area, and the third avatar image 523 may be displayed in a third area. At this time, sizes and positions of the areas in which the first to third avatar images 521, 522, and 523 are displayed may be set based on a user input.

In addition, the second display device 102 may generate and display a second group image 532 including the first avatar image 521, the second avatar image 522, and the third avatar image 523. The second group image 532 may be divided into three areas so that the first avatar image 521 may be displayed in a first area, the second avatar image 522 may be displayed in a second area, and the third avatar image 523 may be displayed in a third area. At this time, sizes and positions of the areas in which the first to third avatar images 521, 522, and 523 are displayed may be set based on a user input.

In addition, the third display device 103 may generate a third group image 533 including the first avatar image 521, the second avatar image 522, and the third avatar image 523. The third group image 533 may be divided into three areas so that the first avatar image 521 may be displayed in a first area, the third avatar image 523 may be displayed in a second area, and the second avatar image 522 may be displayed in a third area. At this time, sizes and positions of the areas in which the first to third avatar images 521, 522, and 523 are displayed may be set based on a user input.

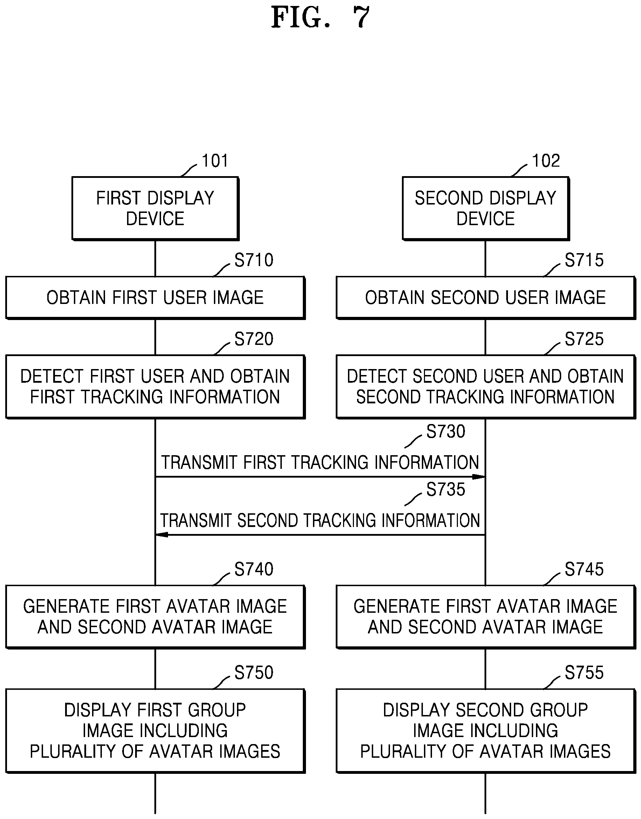

FIG. 7 is a flowchart illustrating an operating method of a plurality of display devices when a group service configuration method is determined on a device basis, according to an embodiment.

The plurality of display devices according to an embodiment may include a first display device 101 and a second display device 102. The plurality of display devices may be devices connected to a group service.

Referring to FIG. 7, the first display device 101 may obtain a first user image captured of the first user by using a camera (S710). At this time, the camera may be a camera mounted on the first display device 101 or a camera connected to the first display device 101 via wired or wireless communication.

In addition, the first display device 101 may detect the first user from the first user image and obtain tracking information (first tracking information) about the first user (S720).

Because a method of obtaining tracking information about the first user has been described in detail with reference to S420 of FIG. 4, the same description is omitted.

The first display device 101 may transmit the first tracking information to the second display device 102 (S730).

In addition, the second display device 102 according to an embodiment may obtain a second user image captured of a user of the second display device (a second user) by using a camera (S715). At this time, the camera may be a camera mounted on the second display device 102 or a camera connected to the second display device 102 via wired or wireless communication.

In addition, the second display device 102 may detect the second user from the second user image and obtain tracking information (second tracking information) about the second user (S725).

Because a method of obtaining tracking information about the user has been described in detail with reference to S425 of FIG. 4, the same description is omitted.

The second display device 102 may transmit the second tracking information to the first display device 101 (S735).

The first display device 101 according to an embodiment may generate a first avatar image based on the first tracking information and generate a second avatar image based on the second tracking information (S740).

For example, the first display device 101 may generate the first avatar image corresponding to the first user image based on first avatar information set by the first user and the first tracking information. In addition, the first display device 101 may obtain second avatar information and generate a second avatar image corresponding to the second user image based on second avatar information and the second tracking information. At this time, the second avatar information may be obtained by receiving avatar information set by the second user or may be obtained by the setting of the first user. However, the disclosure is not limited thereto.

The first display device 101 may generate and display a first group image including the first avatar image and the second avatar image (S750).

For example, the first display device 101 may generate the first group image by combining the first avatar image and the second avatar image onto a virtual background screen. However, the disclosure is not limited thereto.

In addition, the second display device 102 according to an embodiment may generate a first avatar image based on the first tracking information and generate a second avatar image based on the second tracking information (S745).

For example, the second display device 102 may obtain first avatar information and generate the first avatar image corresponding to the first user image based on the first avatar information and the first tracking information. At this time, the first avatar information may be obtained by receiving avatar information set by the first user or may be obtained by the setting of the second user. However, the disclosure is not limited thereto.

**In** addition, the second display device 102 may generate the second avatar image corresponding to the second user image based on the second avatar information set by the second user and the second tracking information.

**The** second display device 102 may generate and display a second group image including the first avatar image and the second avatar image (S755).

For example, the second display device 102 may generate the second group image by combining the first avatar image and the second avatar image onto a virtual background screen. However, the disclosure is not limited thereto.

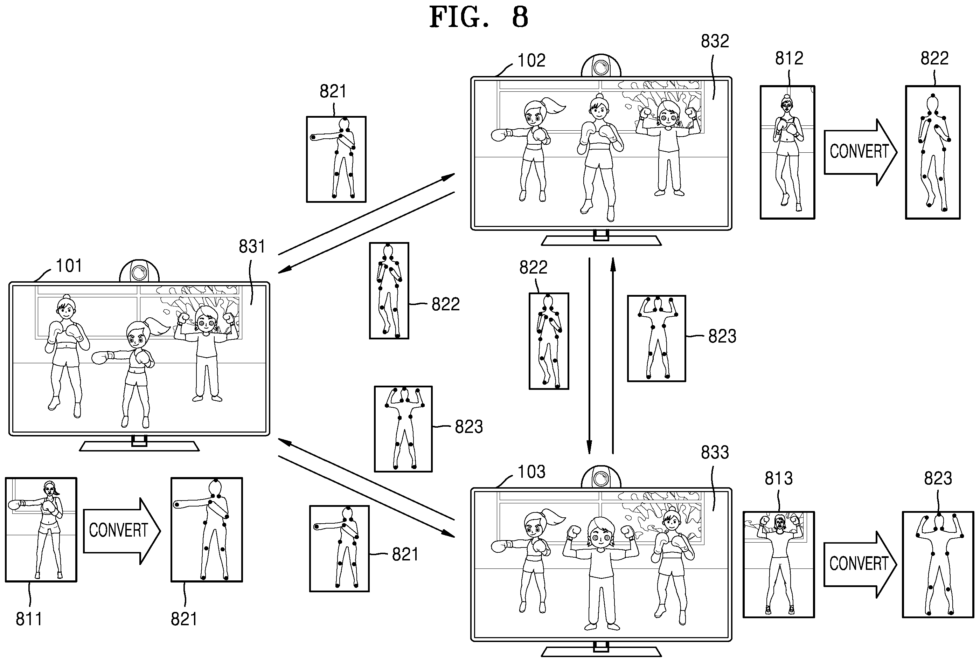

FIG. 8 is a diagram showing operations of a plurality of display devices when the configuration of a group service is on a device basis, according to an embodiment.

Referring to FIG. 8, the plurality of display devices according to an embodiment may include the first display device 101, the second display device 102, and the third display device 103. However, the disclosure is not limited thereto.

The first display device 101, the second display device 102, and the third display device 103 may be devices connected to a group service provided by the server 200. The first display device 101, the second display device 102, and the third display device 103 may be connected as a group based on respective pieces of identification information to be able to share user images with each other.

For example, the first to third display devices 101, 102, and 103 may each transmit user information to the server 200, and the server 200 may perform authentication on the first to third display devices 101, 102, and 103 based on the user information of each of the first to third display devices 101, 102, and 103. Accordingly, the first to third display devices 101, 102, and 103 may log in to the group fitness service.

In addition, the server 200 according to an embodiment may determine that an operation of generating an avatar image is performed by each of the first to third display devices 101, 102, and 103 based on the capability information of each of the first to third display devices 101, 102, and 103. Because this has been described in detail with reference to FIG. 2, a detailed description thereof is omitted.

Each of the first to third display devices 101, 102, and 103 may obtain an image captured of a user. For example, the first display device 101 may obtain a first user image 811 captured of the first user. The first display device 101 may detect the first user from the first user image 811 and obtain tracking information (first tracking information 821) about the first user. In addition, the second display device 102 may obtain a second user image 812. The second display device 102 may detect the second user from the second user image 812 and obtain tracking information (second tracking information 822) about the second user. In addition, the third display device 103 may obtain a third user image 813. The third display device 103 may detect the third user from the third user image 813 and obtain tracking information (third tracking information 823) about the third user.

In addition, although not illustrated in the drawing, in case the device specifications of the second display device 102 fail to meet the criteria for obtaining the second tracking information from the second user image 812, the second display device 102 may transmit the second user image 812 to an external electronic device linked to the second display device 102. The external electronic device may be a personal electronic device of the second user, and the device specifications of the external electronic device may meet the criteria for obtaining the second tracking information from the second user image 812. The external electronic device may detect the second user from the second user image and obtain the second tracking information 822 about the second user. The external electronic device may transmit the second tracking information 822 to the second display device 102.

Each of the first to third display devices 101, 102, and 103 may transmit identification information to other display devices.

Each of the first to third display devices 101, 102, and 103 may request the server 200 for identification information about other display devices connected to the group service and may receive identification information about the other display devices from the server 200. Each of the first to third display devices 101, 102, and 103 may transmit identification information to the other display devices based on the received identification information about the other display devices.

For example, the first display device 101 may transmit the first tracking information 821 to the second and third display devices 102 and 103, receive the second tracking information 822 from the second display device 102, and receive the third tracking information 823 from the third display device 103.

In addition, the second display device 102 may transmit the second tracking information 822 to the first and third display devices 101 and 103, receive the first tracking information 821 from the first display device 101, and receive the third tracking information 823 from the third display device 103.

In addition, the third display device 103 may transmit the third tracking information 823 to the first and second display devices 101 and 102, receive the first tracking information 821 from the first display device 101, and receive the second tracking information 822 from the second display device 102.

The first display device 101 may generate a first avatar image based on the first tracking information 821 and first avatar information, generate a second avatar image based on the second tracking information 822 and second avatar information, and generate a third avatar image based on the third tracking information 823 and third avatar information. At this time, the first avatar information may be set by the first user, and the second avatar information and the third avatar information may be set by the first user or respectively received from the second and third display devices 102 and 103. However, the disclosure is not limited thereto.

The first display device 101 may generate and display a first group image 831 by combining the first to third avatar images onto a virtual background screen.

The second display device 102 may generate a first avatar image based on the first tracking information 821 and first avatar information, generate a second avatar image based on the second tracking information 822 and second avatar information, and generate a third avatar image based on the third tracking information 823 and third avatar information. At this time, the second avatar information may be set by the second user, and the first avatar information and the third avatar information may be set by the second user or respectively received from the first and third display devices 101 and 103. However, the disclosure is not limited thereto.

The second display device 102 may generate and display a second group image 832 by combining the first to third avatar images onto a virtual background screen.

Alternatively, when the second display device 102 may not generate an avatar image or a group image based on tracking information, the second display device 102 may transmit the first to third tracking information 821, 822, and 823 to an external electronic device linked to the second display device 102. The external electronic device may generate first to third avatar images based on the first to third tracking information 821, 822, and 823. In addition, the external electronic device may generate the second group image 832 by combining the first to third avatar images onto a virtual background screen. The external electronic device may transmit the first to third avatar images or the second group image 832 to the second display device 102.

The third display device 103 may generate a first avatar image based on the first tracking information 821 and first avatar information, generate a second avatar image based on the second tracking information 822 and second avatar information, and generate a third avatar image based on the third tracking information 823 and third avatar information. At this time, the third avatar information may be set by the third user, and the first avatar information and the second avatar information may be set by the third user or respectively received from the first and second display devices 101 and 102. However, the disclosure is not limited thereto.

The third display device 103 may generate and display a third group image 833 by combining the first to third avatar images onto a virtual background screen.

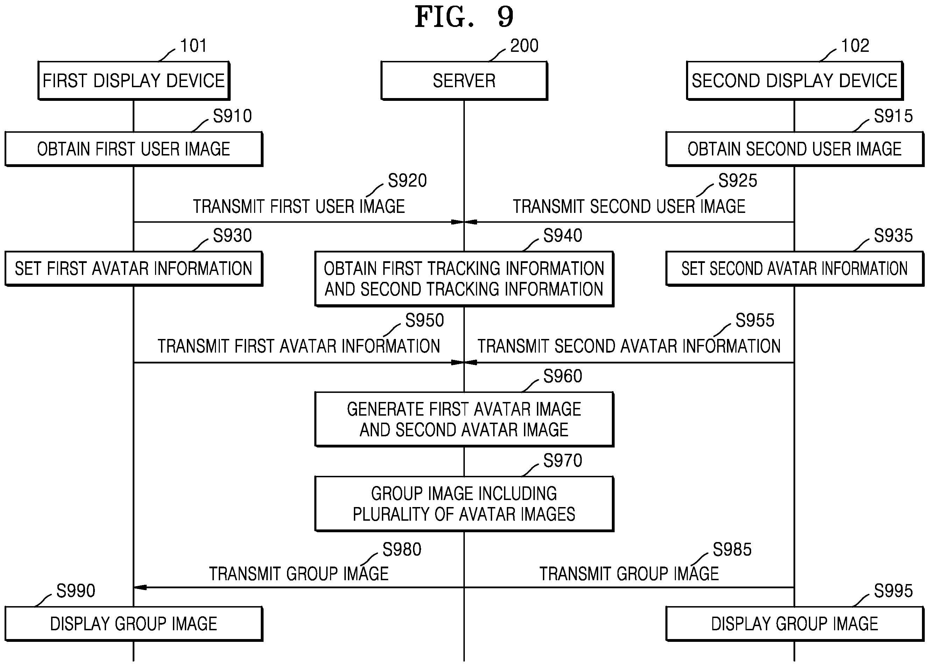

FIG. 9 is a flowchart illustrating operating methods of a plurality of display devices and a server when a group service configuration method is determined on a server basis, according to an embodiment.

The plurality of devices according to an embodiment may include the first display device 101 and the second display device 102, and the first display device 101 and the second display device 102 may be devices connected to a group service.

Referring to FIG. 9, the first display device 101 according to an embodiment may obtain a first user image captured of the first user by using a camera (S910). At this time, the camera may be a camera mounted on the first display device 101 or a camera connected to the first display device 101 via wired or wireless communication.

In addition, the first display device 101 may transmit the first user image to the server 200 (S920).

The second display device 102 may obtain a second user image captured of the second user by using a camera (S915). At this time, the camera may be a camera mounted on the second display device 102 or a camera connected to the second display device 102 via wired or wireless communication.

In addition, the second display device 102 may transmit the second user image to the server 200 (S925).

The server 200 may detect the first user from the first user image and obtain first tracking information about the first user. In addition, the server 200 may detect the second user from the second user image and obtain second tracking information about the second user (S940).

For example, the server 200 may detect the first user by analyzing the first user image by using an object detection module. The object detection module may include a suitable logic, circuit, interface, and/or code that enables detection of a particular object included in an image captured by the camera. The object detection module may detect the first user by analyzing the first user image by using at least one of machine learning, a neural network, or a deep learning algorithm as a rule-based or artificial intelligence algorithm. In addition, the server 200 may obtain the first tracking information by using a tracking module. The tracking module may include a suitable logic, circuit, interface, and/or code capable of tracking a movement of a particular object included in an image captured by the camera. The tracking module may obtain movement information of the first user from the first user image by using at least one of machine learning, a neural network, or a deep learning algorithm as a rule-based or artificial intelligence algorithm.

For example, the tracking module may estimate a pose of the first user, identify a particular body part (for example, face, hand, or the like) of the first user based on the estimated pose, and detect a movement with respect to the identified particular body part in more detail.

In addition, the server 200 may detect the second user by analyzing the second user image by using the object detection module and may obtain movement information of the second user from the second user image by using the tracking module.

Meanwhile, the first display device 101 may transmit first avatar information set by the first user to the server 200 (S950), and the second display device 102 may transmit second avatar information set by the second user to the server 200 (S955).

The server 200 may generate a first avatar image based on the first tracking information and the first avatar information and generate a second avatar image based on the second tracking information and the second avatar information (S960). At this time, the first avatar image may be an image that moves in correspondence to the first user in the first user image, and the second avatar image may be an image that moves in correspondence to the second user in the second user image.

The server 200 may generate a group image including the first avatar image and the second avatar image (S970). For example, the server 200 may generate the group image by combining the first avatar image and the second avatar image onto a virtual background screen.

Alternatively, the server 200 may generate a first group image and a second group image, which have different sizes and positions of the first avatar image and the second avatar image. For example, the first avatar image may be displayed larger than the second avatar image in the first group image, and the second avatar image may be displayed larger than the first avatar image in the second group image. However, the disclosure is not limited thereto.

The server 200 may transmit the group image to the first display device 101 and the second display device 102 (S980, S985). For example, the server 200 may transmit the first group image to the first display device 101 and transmit the second group image to the second display device 102.

The first display device 101 and the second display device 102 may display the group image received from the server 200 (S990, S995). For example, the first display device 101 may display the first group image, and the second display device 102 may display the second group image.

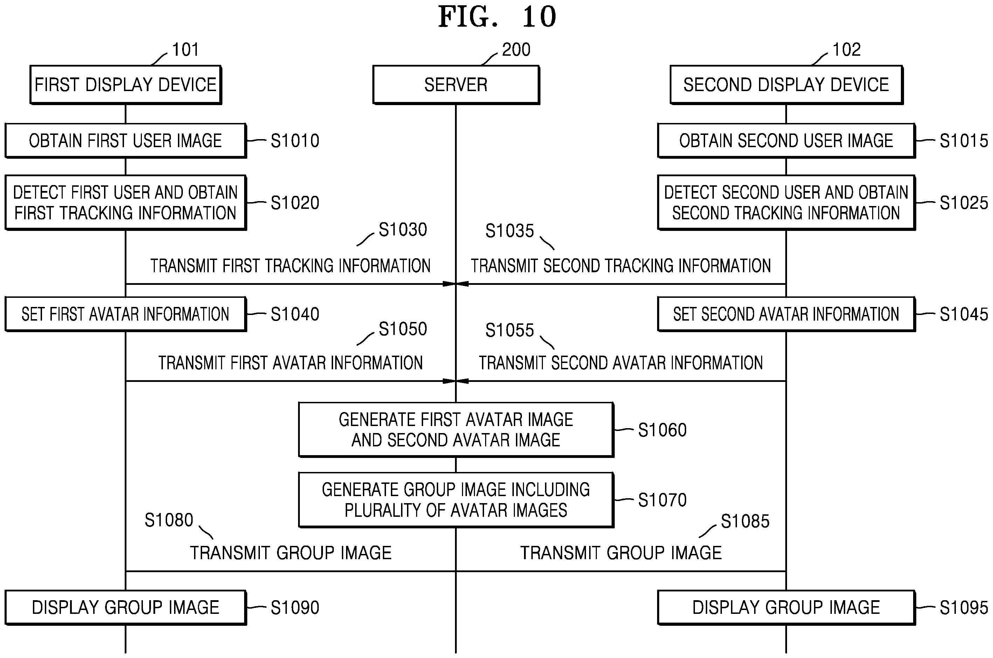

FIG. 10 is a flowchart illustrating operating methods of a plurality of display devices and a server when a group service configuration method is determined on a server basis, according to an embodiment.

The plurality of devices according to an embodiment may include the first display device 101 and the second display device 102, and the first display device 101 and the second display device 102 may be devices connected to a group service.

Referring to FIG. 10, the first display device 101 according to an embodiment may obtain a first user image captured of the first user by using a camera (S1010).

The first display device 101 may detect the first user from the first user image and obtain first tracking information about the detected first user (S1020).

For example, the first display device 101 may detect the first user by analyzing the first user image by using an object detection module. The object detection module may include a suitable logic, circuit, interface, and/or code that enables detection of a particular object included in an image captured by the camera. The object detection module may detect the first user by analyzing the first user image by using at least one of machine learning, a neural network, or a deep learning algorithm as a rule-based or artificial intelligence algorithm.

In addition, the first display device 101 may obtain the first tracking information by using a tracking module. The tracking module may include a suitable logic, circuit, interface, and/or code capable of tracking a movement of a particular object included in an image captured by the camera. The tracking module may obtain movement information of the first user from the first user image by using at least one of machine learning, a neural network, or a deep learning algorithm as a rule-based or artificial intelligence algorithm.

For example, the tracking module may estimate a pose of the first user, identify a particular body part (for example, face, hand, or the like) of the first user based on the estimated pose, and detect a movement with respect to the identified particular body part in more detail.

However, the object detection module and the tracking module described above are only examples, and the first display device 101 according to an embodiment may detect the first user from the first user image and obtain the first tracking information through various methods.

The first display device 101 may transmit the first tracking information to the server 200 (S1030).

In addition, the first display device 101 may transmit first avatar information set by the first user to the server 200 (S1050).

In addition, the second display device 102 according to an embodiment may obtain a second user image captured of the second user by using a camera (S1015).

The second display device 102 may detect the second user from the second user image and obtain second tracking information about the second user (S1025).

The second display device 102 may obtain the second tracking information about the second user by using the object detection module and the tracking module described above with reference to S1020.

The second display device 102 may transmit the second tracking information to the server 200 (S1035).

In addition, the second display device 102 may transmit second avatar information set by the second user to the server 200 (S1055).

The server 200 according to an embodiment may generate a first avatar image based on the first tracking information and the first avatar information and may generate a second avatar image based on the second tracking information and the second avatar information (S1060). At this time, the first avatar image may be an image that moves in correspondence to the first user in the first user image, and the second avatar image may be an image that moves in correspondence to the second user in the second user image.

The server 200 may generate a group image including the first avatar image and the second avatar image (S1070). For example, the server 200 may generate the group image by composing the first avatar image and the second avatar image onto a virtual background screen.

Alternatively, the server 200 may generate a first group image and a second group image, which have different sizes and positions of the first avatar image and the second avatar image. For example, the first avatar image may be displayed larger than the second avatar image in the first group image, and the second avatar image may be displayed larger than the first avatar image in the second group image. However, the disclosure is not limited thereto.

The server 200 may transmit the group image to the first display device 101 and the second display device 102 (S1080, S1085). For example, the server 200 may transmit the first group image to the first display device 101 and transmit the second group image to the second display device 102.

The first display device 101 and the second display device 102 may display the group image received from the server 200 (S1090, S1095). For example, the first display device 101 may display the first group image, and the second display device 102 may display the second group image.

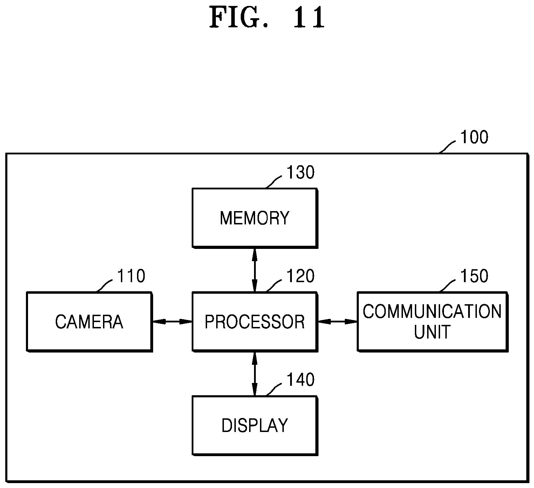

FIG. 11 is a block diagram showing the configuration of a display device according to an embodiment.

A display device 100 according to the embodiment of FIG. 11 may be any one of the plurality of display devices 101, 102, and 103 of FIGS. 1 to 10.

Referring to FIG. 11, the display device 100 according to an embodiment may include a camera 110, a processor 120, a memory 130, a display 140, and a communication unit 150.

The camera 110 according to an embodiment may obtain an image frame such as a still image, a video, or the like. For example, the camera 110 may capture an image of the outside of the display device 100 and may capture an image of a user of the display device 100. At this time, the image captured through the camera 110 may be processed by the processor 120 or a separate image processor.

The camera 110 according to an embodiment may be built into or mounted as a component of the display device 100. Alternatively, the camera 110 may be connected to the display device 100 via wired or wireless communication through an input/output interface or the communication unit 150 as a separate component from the display device 100. However, the disclosure is not limited thereto.

The processor 120 according to an embodiment controls the overall operation of the display device 100 and a signal flow between internal components of the display device 100, and performs a function of processing data.

The processor 120 may include a single core, dual cores, triple cores, quad cores, and multiples thereof. In addition, the processor 120 may include a plurality of processors. For example, the processor 120 may be implemented as a main processor (not shown) and a sub-processor (not shown).

In addition, the processor 120 may include at least one of a central processing unit (CPU), a graphics processing unit (GPU), and a video processing unit (VPU). Alternatively, according to embodiments, the processor 120 may be implemented in a form of a system-on-chip (SoC) integrating at least one of a CPU, a GPU, and a VPU. Alternatively, the processor 120 may further include a neural processing unit (NPU).

The memory 130 according to an embodiment may store various pieces of data, programs, or applications for driving and controlling the display device 100.

In addition, a program stored in the memory 130 may include one or more instructions. The program (one or more instructions) or application stored in the memory 130 may be executed by the processor 120.

The processor 120 according to an embodiment may control the communication unit 150 to obtain device capability information of the display device 100 and transmit the obtained device capability information to the server 200 by executing the one or more instructions stored in the memory 130.

The device capability information according to an embodiment may include at least one of: type information, capacity information, information about the number of cores and performance information, with respect to at least one processor included in the display device 100; and type information, capacity information and performance information, with respect to memory included in the display device 100.

The processor 120 may receive information about a configuration method of a group service from the server 200. Alternatively, the processor 120 may determine the configuration method of the group service based on the device capability information and service determination policy information received from the server 200.

When a group service configuration method according to an embodiment is determined on a device basis, the processor 120 may detect a user from a user image captured of the user and obtain tracking information. The processor 120 may detect the user by analyzing the user image by using an object detection module. The object detection module may include a suitable logic, circuit, interface, and/or code that enables detection of a particular object included in an image captured by the camera. The object detection module may detect the user by analyzing the user image by using at least one of machine learning, a neural network, or a deep learning algorithm as a rule-based or artificial intelligence algorithm.

In addition, the processor 120 may obtain tracking information by using a tracking module. The tracking module may include a suitable logic, circuit, interface, and/or code capable of tracking a movement of a particular object included in an image captured by the camera. The tracking module may obtain movement information of the user from the user image by using at least one of machine learning, a neural network, or a deep learning algorithm as a rule-based or artificial intelligence algorithm.

For example, the tracking module may estimate a pose of the user, identify a particular body part (for example, face, hand, or the like) of the user based on the estimated pose, and detect a movement with respect to the identified particular body part in more detail. However, the disclosure is not limited thereto.

For example, the processor 120 may obtain tracking information by using a neural network trained to obtain tracking information from a user image. However, the disclosure is not limited thereto.

The neural network according to an embodiment may be a network that has been trained in various criteria or conditions for obtaining tracking information from a user image based on various pieces of training data. Here, 'training' may mean training a neural network so that the neural network may discover or learn on its own to obtain a method of analyzing input data when various pieces of collected data are input to the neural network, a method of obtaining tracking information from a user image based on the input data, or the like. Accordingly, the neural network that has completed training may obtain tracking information from a user image. At this time, the trained neural network may be stored in advance in the display device 100 and may be periodically updated through communication with an external server.

The processor 120 according to an embodiment may generate an avatar image corresponding to the user image. The processor 120 may generate an avatar image based on avatar information set by the user and the tracking information. At this time, the avatar image may be an image that moves in correspondence to the user in the user image.

The processor 120 according to an embodiment may control the communication unit 150 to transmit the avatar image to other display devices. In addition, the processor 120 may receive an avatar image of another user from another display device or information (for example, tracking information about another user) for generating another avatar image through the communication unit 150.

The processor 120 may generate a group image by combining the avatar image and an avatar image (another avatar image) of another user.

On the contrary, when the group service configuration method according to an embodiment is determined on a device basis, the processor 120 may control the communication unit 150 to transmit a user image or tracking information detected from the user image to the server 200.

The processor 120 may receive a group image including avatar images of a plurality of users from the server 200 and may control the display 140 to display the received group image.

The display 140 according to an embodiment may generate a driving signal by converting an image signal, a data signal, an on screen display (OSD) signal, a control signal, or the like, which has been processed by the processor 120, and may display an image according to the driving signal.

The display 140 according to an embodiment may be implemented as a plasma display panel (PDP), a liquid crystal display (LCD), an organic light-emitting diode (OLED), a flexible display, or the like, and may also be implemented as a three-dimensional (3D) display. In addition, the display 140 is configured as a touch screen and may be used as an input device in addition to an output device.

The display 140 according to an embodiment may display a user interface screen that may set avatar information. In addition, the display 140 may display a group image including a plurality of avatar images for a plurality of users. For example, the display 140 may divide a single screen into a plurality of areas and individually display different avatar images in respective divided areas.

Alternatively, the group image according to an embodiment may include an image in which a plurality of avatar images are composed onto a virtual background screen. However, the disclosure is not limited thereto.

The communication unit 150 according to an embodiment may transmit and receive data or signals to/from an external device or a server. For example, the communication unit 150 may include a Wi-Fi module, a Bluetooth module, an infrared communication module, a wireless communication module, a LAN module, an Ethernet module, a wired communication module, or the like. At this time, each communication module may be implemented in a form of at least one hardware chip.

The Wi-Fi module and the Bluetooth module respectively communicate via a Wi-Fi method and a Bluetooth method. When a Wi-Fi module or a Bluetooth module is used, various pieces of connection information, such as a service set identifier (SSID), a session key, or the like, may be first transmitted and received, and various types of information may be transmitted and received after a communication is established by using the connection information. The wireless communication module may include at least one communication chip that performs communication according to various wireless communication standards, such as Zigbee, 3rd Generation (3G), 3rd Generation Partnership Project (3GPP), Long Term Evolution (LTE), LTE Advanced (LTE-A), 4th Generation (4G), 5th Generation (5G), or the like.

The communication unit 150 according to an embodiment may transmit device capability information to the server 200 and may receive information about a group service configuration method from the server 200.

In addition, the communication unit 150 may transmit a user image captured of a user or tracking information obtained from the user image to the server 200, and may receive a group image including avatar images for a plurality of users from the server 200.

In addition, the communication unit 150 may receive, from the server 200, identification information about other display devices connected to the group service.

In addition, the communication unit 150 may transmit the tracking information obtained from the user image or an avatar image to another display device, and may receive tracking information about another user or an avatar image for the other user from the user display device. However, the disclosure is not limited thereto.

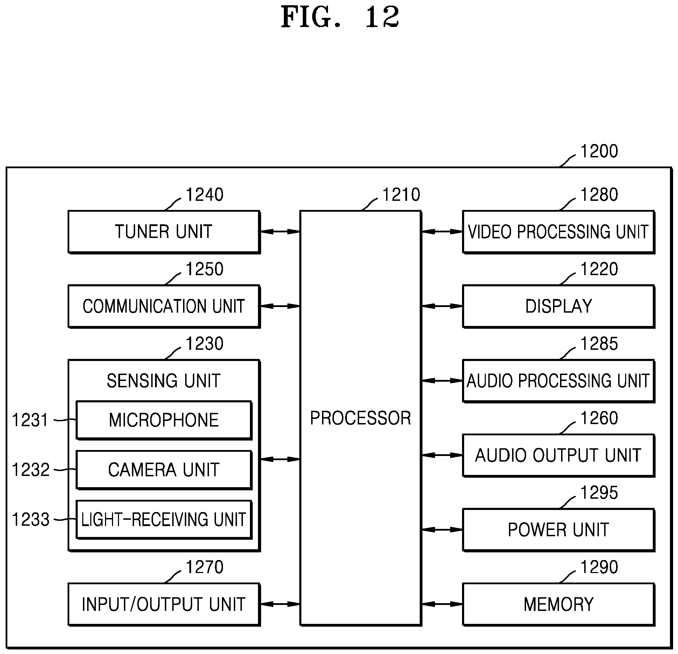

FIG. 12 is a block diagram showing the configuration of a display device according to an embodiment.

Referring to FIG. 12, a display device 1200 of FIG. 12 may be another embodiment of the display device 100 of FIG. 11.

Referring to FIG. 12, the display device 1200 according to an embodiment may include a tuner unit 1240, a processor 1210, a display 1220, a communication unit 1250, a sensing unit 1230, an input/output unit 1270, a video processing unit 1280, an audio processing unit 1285, an audio output unit 1260, memory 1290, and a power unit 1295.

A camera unit 1232 included in the sensing unit 1230, the processor 1210, the display 1220, the communication unit 1250, and the memory 1290 of FIG. 12 are components corresponding to the camera 110, the processor 120, the display 140, the communication unit 150, and the memory 130 of FIG. 11, respectively, and thus the same description is omitted.

The tuner unit 1240 according to an embodiment may tune and select only a frequency of a channel to be received by the display device 1200 among radio wave components through amplification, mixing, resonance, or the like of a broadcast signal received by wire or wirelessly. The broadcast signal includes an audio, a video, and additional information (for example, electronic program guide (EPG)).

The tuner unit 1240 may receive a broadcast signal from various sources, such as a terrestrial broadcast, a cable broadcast, a satellite broadcast, an Internet broadcast, or the like. The tuner unit 1240 may also receive a broadcast signal from a source, such as an analog broadcast or a digital broadcast.

The sensing unit 1230 may sense the voice, image, or interaction of a user, and may include a microphone 1231, the camera unit 1232, and a light-receiving unit 1233.

The microphone 1231 receives the utterance voice of a user. The microphone 1231 may convert a received voice into an electrical signal and output the electrical signal to the processor 1210. A user voice may include, for example, a voice corresponding to a menu or function of the display device 1200.

The camera unit 1232 may receive an image (for example, consecutive frames) corresponding to a user's motion including a gesture within a camera recognition range. The processor 1210 may use a recognition result of a received motion to select a menu displayed on the display device 1200 or perform control corresponding to the motion recognition result.

The light-receiving unit 1233 receives an optical signal (including a control signal) received from an external control device through an optical window (not shown) of a bezel of the display 1220 or the like. The light-receiving unit 1233 may receive an optical signal corresponding to a user input (e.g., a touch, press, touch gesture, voice, or motion) from a control device. A control signal may be extracted from the received optical signal under the control of the processor 1210.

The input/output unit 1270 receives a video (e.g., moving images or the like), an audio (e.g., a voice, a music, or the like), and additional information (e.g., EPG, or the like) from the outside of the display device 1200. An input/output interface may include any one of a high-definition multimedia interface (HDMI), a mobile high-definition link (MHL), a universal serial bus (USB), Thunderbolt, a video graphics array (VGA) port, a red-green-blue (RGB) port, D-subminiature (D-SUB), a digital visual interface (DVI), a component jack, and a PC port.

The processor 1210 controls the overall operation of the display device 1200 and a signal flow between internal components of the display device 1200, and performs a function of processing data.

The processor 1210 may include random-access memory (RAM) that stores signals or data input from the outside of the display device 1200 or is used as a storage area corresponding to various tasks performed in the display device 1200, read-only memory (ROM) that stores a control program for controlling the display device 1200, and a processor.

The video processing unit 1280 performs processing on video data received by the display device 1200. The video processing unit 1280 may perform various image processing, such as decoding, scaling, noise filtering, frame rate conversion, and resolution conversion, on video data.

The display 1220 according to an embodiment may generate a driving signal by converting an image signal, a data signal, an OSD signal, a control signal, or the like, which has been processed by the processor 1210, and may display an image according to the driving signal.

The audio processing unit 1285 according to an embodiment performs processing on audio data. The audio processing unit 1285 may perform various processing, such as decoding, amplification, and noise filtering on audio data. Meanwhile, the audio processing unit 1285 may include a plurality of audio processing modules to process audio corresponding to a plurality of contents.

The audio output unit 1260 outputs audio included in a broadcast signal received through the tuner unit 1240 under the control of the processor 1210. The audio output unit 1260 may output an audio (for example, a voice and a sound) input through the communication unit 1250 or the input/output unit 1270. In addition, the audio output unit 1260 may output an audio stored in the memory 1290 under the control of the processor 1210. The audio output unit 1260 may include at least one of a speaker, a headphone output terminal, or a Sony/Philips digital interface (S/PDIF) output terminal.

The power unit 1295 supplies power input from an external power source to components inside the display device 1200 under the control of the processor 1210. In addition, the power unit 1295 may supply power output from one or more batteries (not shown) located inside the display device 1200 to the components inside the display device 1200 under the control of the power unit 1295.

The memory 1290 may store various pieces of data, programs, or applications for driving and controlling the display device 1200 under the control of the processor 1210. The memory 1290 may include a broadcast receiving module, a channel control module, a volume control module, a communication control module, a voice recognition module, a motion recognition module, a light-receiving module, a display control module, an audio control module, an external input control module, a power control module, a power control module of an external device that is connected wirelessly (e.g., Bluetooth), a voice database (DB), or a motion DB, which is not shown in the drawing. The unshown modules and DB of the memory 1290 may be implemented in a form of software to perform a control function of broadcast reception, a channel control function, a volume control function, a communication control function, a voice recognition function, a motion recognition function, a light reception function, a display control function, an audio control function, an external input control function, and a power control function in the display device 1200, or a power control function of an external device connected wirelessly (e.g., Bluetooth). The processor 1210 may perform respective functions by using the software stored in the memory 1290.

Meanwhile, the block diagrams of the display devices 100 and 1200 respectively shown in FIGS. 11 and 12 are block diagrams for one embodiment. Each component of the block diagrams may be integrated, added, or omitted depending on the specifications of the display devices 100 and 1200 to be actually implemented. That is, two or more components may be combined into one component, or one component may be divided into two or more components, as needed. In addition, a function performed in each block is intended to explain embodiments, and the particular operations or devices thereof do not limit the scope of the present disclosure.

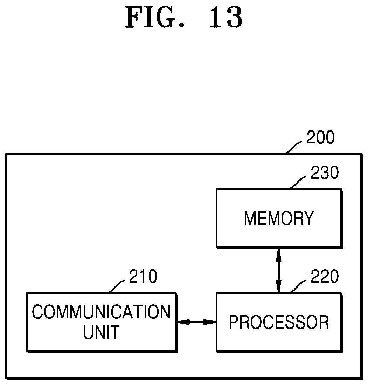

FIG. 13 is a block diagram showing the configuration of a server according to an embodiment.

Referring to FIG. 13, a server 200 according to an embodiment may include a communication unit 210, a processor 220, and memory 230.

The communication unit 210 according to an embodiment may transmit and receive data or signals to/from a plurality of display devices. For example, the communication unit 210 may include a Wi-Fi module, a Bluetooth module, an infrared communication module, a wireless communication module, a LAN module, an Ethernet module, a wired communication module, or the like. At this time, each communication module may be implemented in a form of at least one hardware chip.

The Wi-Fi module and the Bluetooth module respectively communicate via a Wi-Fi method and a Bluetooth method. When a Wi-Fi module or a Bluetooth module is used, various pieces of connection information, such as a service set identifier (SSID), a session key, or the like, may be first transmitted and received, and various types of information may be transmitted and received after a communication is established by using the connection information. The wireless communication module may include at least one communication chip that performs communication according to various wireless communication standards, such as Zigbee, 3G, 3GPP, LTE, LTE-A, 4G, 5G, or the like.

The communication unit 210 according to an embodiment may receive device capability information from a plurality of display devices connected to a group service. In addition, the communication unit 210 may transmit information about a group service configuration method determined based on the received device capability information to the plurality of display devices.

Also, the communication unit 210 may receive user images or tracking information obtained from the user images from the plurality of display devices. The communication unit 210 may transmit a group image including avatar images for a plurality of users, which is generated based on the user images or the tracking information, to the plurality of display devices.

The processor 220 according to an embodiment controls the overall operation of the server 200 and a signal flow between internal components of the server 200, and performs a function of processing data.

The processor 220 may include a single core, dual cores, triple cores, quad cores, and multiples thereof. In addition, the processor 220 may include a plurality of processors. For example, the processor 220 may be implemented as a main processor (not shown) and a sub-processor (not shown).

In addition, the processor 220 may include at least one of a CPU, a GPU, and a VPU. Alternatively, according to embodiments, the processor 120 may be implemented in a form of an SoC integrating at least one of a CPU, a GPU, and a VPU. Alternatively, the processor 220 may further include a NPU.

The memory 230 according to an embodiment may store various pieces of data, programs, or applications for driving and controlling the server 200.

In addition, a program stored in the memory 230 may include one or more instructions. The program (one or more instructions) or application stored in the memory 230 may be executed by the processor 220.

The processor 220 according to an embodiment may determine a configuration method of a group service based on device capability information received from a display device and service determination policy information by executing the one or more instructions stored in the memory 230.

The device capability information according to an embodiment may include at least one of: type information, capacity information, information about the number of cores and performance information, with respect to at least one processor included in the display device, and type information, capacity information and performance information, with respect to memory included in the display device.

The server 200 may store the service determination policy information for determining a service configuration method. The service determination policy information may include criteria for device specifications (for example, type information, capacity information, information about the number of cores and performance information, with respect to a processor, and type information, capacity information and performance information, with respect to memory) required to perform an operation included in a group service, such as generating an avatar on a device, or the like. However, the disclosure is not limited thereto.

The service determination policy information may vary depending on the number of concurrent users connected to the server, network situation, or the like. In addition, the service determination policy information may also be changed as functions provided by the group service are changed. However, the disclosure is not limited thereto.

The processor 220 may determine whether the configuration of a group service is on a device basis or a server basis by comparing the device capability information with the service determination policy information.

When it is determined that the configuration of the group service is on a server basis, the processor 220 may detect a user from a user image received from a display device and obtain tracking information.

The processor 220 may detect the user by analyzing the user image by using an object detection module. The object detection module may include a suitable logic, circuit, interface, and/or code that enables detection of a particular object included in an image captured by the camera. The object detection module may detect the user by analyzing the user image by using at least one of machine learning, a neural network, or a deep learning algorithm as a rule-based or artificial intelligence algorithm.

In addition, the processor 220 may obtain tracking information by using a tracking module. The tracking module may include a suitable logic, circuit, interface, and/or code capable of tracking a movement of a particular object included in an image captured by the camera. The tracking module may obtain movement information of the user from the user image by using at least one of machine learning, a neural network, or a deep learning algorithm as a rule-based or artificial intelligence algorithm.

For example, the tracking module may estimate a pose of the user, identify a particular body part (for example, face, hand, or the like) of the user based on the estimated pose, and detect a movement with respect to the identified particular body part in more detail. However, the disclosure is not limited thereto.

Alternatively, the processor 220 may generate an avatar image based on the tracking information and avatar information received from the display device. At this time, the avatar image may be an image that moves in correspondence to the user in the user image.

The processor 220 may generate a group image by combining avatar images for a plurality of users and control the communication unit 210 to transmit the group image to the plurality of display devices.

A display device according to an embodiment may include a communication unit, a display, a memory storing one or more instructions, and at least one processor executing the one or more instructions.

The at least one processor may obtain a first user image captured of a first user by executing the one or more instructions.

The at least one processor may control the communication unit to transmit capability information of the display device to a server by executing the one or more instructions.

The at least one processor may receive information about a configuration method of a group service determined based on the capability information from the server by executing the one or more instructions.

The at least one processor may obtain the first avatar image and a second avatar image corresponding to a user of another display device based on the received information by executing the one or more instructions.

The at least one processor may control the display device to display the group image including the first avatar image and the second avatar image by executing the one or more instructions.

The capability information of the display device may include at least one of: type information, capacity information, information about the number of cores and performance information, with respect to at least one processor included in the display device; and type information, capacity information and performance information, with respect to memory included in the display device.

The configuration method of the group service may be determined as any one of a device-based configuration method by which the display device generates the first avatar image corresponding to the first user image and a server-based configuration method by which the server generates the first avatar image and a second avatar image corresponding to a user of another display device connected to the group service.

The at least one processor may, based on the determination of the configuration method of the group service as a device-based configuration method, detect the first user from the first user image and obtain the first avatar image based on tracking information of the first user by executing the one or more instructions.

The at least one processor may control the communication unit to receive at least one of the second avatar image and information about the second avatar image from the other display device by executing the one or more instructions.

The at least one processor may generate the second avatar image based on the reception of the information about the second avatar image by executing the one or more instructions.

The at least one processor may generate the group image by combining the first avatar image, the second avatar image, and a virtual background image by executing the one or more instructions.

The at least one processor may control the communication unit to request the server for device information about the other display device and receive the device information about the other display device from the server by executing the one or more instructions.

The at least one processor may control the communication unit to transmit at least one of the first avatar image or information about the first avatar image to the other display device based on the device information about the other display device by executing the one or more instructions.

The at least one processor may control the communication unit to transmit at least one of the first user image and information about the first user detected from the first user image to the server based on the determination of the configuration method of the group service as a server-based configuration method by executing the one or more instructions.

The at least one processor may receive the group image including the first avatar image and the second avatar image from the server by executing the one or more instructions.

The at least one processor may receive an input for setting avatar information corresponding to the first avatar image by executing the one or more instructions.

The first avatar image may be an avatar image generated based on the set avatar information.

The display device may further include a camera that obtains the first user image by capturing an image of the first user.

An operating method of a display device according to an embodiment may include obtaining a first user image captured of a first user.

The operating method of the display device according to an embodiment may include transmitting capability information of the display device to a server.

The operating method of the display device according to an embodiment may include receiving information about a configuration method of a group service determined based on the capability information from the server.

The operating method of the display device according to an embodiment may include obtaining the first avatar image and a second avatar image corresponding to a user of another display device based on the received information.

The operating method of the display device according to an embodiment may include displaying a group image including the first avatar image and the second avatar image.

The obtaining of the first avatar image and the second avatar image may include detecting the first user from the first user image and, based on tracking information about the first user, generating the first avatar image, based on the determination of a configuration method of the group service as the device-based configuration method.

The obtaining of the first avatar image and the second avatar image may include receiving at least one of the second avatar image and information about the second avatar image from the other display device.

The obtaining of the first avatar image and the second avatar image may include generating the second avatar image based on the reception of information about the second avatar image.

The operating method of the display device according to an embodiment may further include generating the group image by combining the first avatar image, the second avatar image, and a virtual background screen.

The operating method of the display device according to an embodiment may further include requesting the server for device information about the other display device and receiving the device information about the display device from the server, based on the determination of the configuration method of the group service as the device-based configuration method.

The operating method of the display device according to an embodiment may further include transmitting at least one of the first avatar image or information about the first avatar image to the other display device based on the device information about the other display device.

The obtaining of the first avatar image and the second avatar image may include transmitting at least one of the first user image and information about the first user detected from the first user image to the server based on the determination of the configuration method of the group service as the server-based configuration method.

The obtaining of the first avatar image and the second avatar image may include receiving the group image including the first avatar image and the second avatar image from the server.

The operating method of the display device according to an embodiment may include receiving an input for selecting avatar information corresponding to the first avatar image.

The first avatar image may be an avatar image generated based on the set avatar information.

The operating method of the display device according to an embodiment may variably configure the group service according to the device capability information of the display device, thereby enabling various display devices to use the group service. Accordingly, a group service may be used through a server even when the specifications of a device are not high, thereby expanding a scope capable of providing services.

In addition, a display device according to an embodiment and an operating method thereof may optimize a configuration method of a group service by variably configuring the group service according to network conditions.

In addition, the display device according to an embodiment and the operating method thereof may protect the privacy of individual users by displaying a group image converted from user images to avatar images when using the group service.

The operating method of the display device according to an embodiment may be implemented in a form of program commands that may be executed through various computer units and recorded on a computer-readable medium. The computer-readable medium may include program commands, data files, data structures, or the like alone or in combination. The program commands recorded in the medium may be program commands specially designed and configured for the present disclosure or may be program commands known and available to those skilled in the art of computer software. Examples of the computer-readable medium include magnetic media such as hard disks, floppy disks, and magnetic tape, optical media such as CD-ROMs and DVDs, magnetooptical media such as floptical disks, and hardware devices specifically configured to store and execute program instructions, such as ROM, RAM, and flash memory. Examples of the program commands include machine language code, such as machine language code produced by a compiler, as well as high-level language code that may be executed by a computer using an interpreter or the like.

In addition, at least one of the operating methods of the display device according to the embodiments described above may be included and provided as a computer program product. The computer program product may be traded between sellers and buyers as commodities.

The computer program product may include a software (S/W) program and a computer-readable storage medium having the S/W program stored thereon. For example, the computer program product may include a product in a form of an S/W program, (e.g., a downloaded application) distributed electronically through manufacturers of electronic devices or electronic markets (e.g., Google Play Store, App Store). At least a portion of the S/W program may be stored on a storage medium or temporarily generated for electronic distribution. In this case, the storage medium may be a server of a manufacturer, a server of an electronic market, or a storage medium of a relay server that temporarily stores the S/W program.

The computer program product may include a storage medium of a server or a storage medium of a client device in a system configured with the server and the client device. Alternatively, when a third device (e.g., a smart phone) that is in communication and connection to the server or the client device, the computer program product may include a storage medium of the third device. Alternatively, the computer program product may include a S/W program that is transmitted from the server to the client device or the third device or from the third device to the client device.

In this case, one of the server, the client device, and the third device may execute the computer program product to perform the method according to the embodiments disclosed above. Alternatively, two or more of the server, the client device, and the third device may execute the computer program product to distributedly implement the method according to the embodiments disclosed above.

For example, the server (e.g., a cloud server or an artificial intelligence server) may execute a computer program product stored on the server to control the client device communicating with the server to perform the method according to the embodiments disclosed above.

Although embodiments have been described in detail above, the scope of the present disclosure is not limited thereto, and various modifications and improvements made by those skilled in the art using the basic concept of the present disclosure defined in the following claims also fall within the scope of the present disclosure.

## Claims

1. A display device 100 comprising:
a communication unit 150;
a display 140;
a memory 130 storing one or more instructions; and
at least one processor 120 configured to execute the one or more instructions,
wherein the at least one processor 120 executes the one or more instructions to:
obtain a first user image captured of a first user,
control the communication unit to transmit capability information about the display device to a server,
receive, from the server, information about a configuration method of a group service determined based on the capability information,
obtain a first avatar image and a second avatar image corresponding to a user of another display device, based on the received information, and
control the display to display a group image comprising the first avatar image and the second avatar image.

2. The display device of claim 1, wherein the capability information of the display device comprises at least one of: type information, capacity information, information about the number of cores and performance information, with respect to the at least one processor included in the display device; and type information, capacity information, and performance information, with respect to the memory included in the display device.

3. The display device of claim 1 or claim 2, wherein the configuration method of the group service is determined as any one of: a device-based configuration method by which the display device generates the first avatar image corresponding to the first user image; and a server-based configuration method by which the server generates the first avatar image and the second avatar image corresponding to the user of the other display device connected to the group service.

4. The display device of claim 3, wherein the at least one processor 120 executes the one or more instructions to:
based on determination of the configuration method of the group service as the device-based configuration method, detect the first user from the first user image and generate the first avatar image, based on tracking information about the first user,
control the communication unit to receive at least one of the second avatar image and information about the second avatar image from the other display device, and
generate the second avatar image, based on reception of information about the second avatar image.

5. The display device of claim 4, wherein the at least one processor 120 executes the one or more instructions to generate the group image by combining the first avatar image, the second avatar image, and a virtual background image.

6. The display device of claim 4 or 5, wherein the at least one processor 120 executes the one or more instructions to control the communication unit 150 to request the server for device information about the other display device and receive the device information about the other display device from the server.

7. The display device of claim 6, wherein the at least one processor 120 executes the one or more instructions to control the communication unit 150 to transmit at least one of the first avatar image or information about the first avatar image to the other display device, based on the device information about the other display device.

8. The display device of any one of claims 3 to 7, wherein the at least one processor 120 executes the one or more instructions to:
based on determination of the configuration method of the group service as the server-based configuration method, control the communication unit 150 to transmit at least one of the first user image and information about the first user detected from the first user image to the server, and
receive the group image comprising the first avatar image and the second avatar image from the server.

9. The display device of any one of claims 1 to 8, wherein the at least one processor 120 executes the one or more instructions to receive an input that selects avatar information corresponding to the first avatar image, and the first avatar image comprises an avatar image generated based on the selected avatar information.

10. The display device of any one of claims 1 to 9, wherein the display device further comprises a camera 110 configured to obtain the first user image by capturing an image of the first user.

11. An operating method of a display device, comprising:
obtaining a first user image captured of a first user;
transmitting capability information about the display device to a server;
receiving, from the server, information about a configuration method of a group service determined based on the capability information;
obtaining a first avatar image and a second avatar image corresponding to a user of another display device, based on the received information; and
displaying a group image comprising the first avatar image and the second avatar image.

12. The method of claim 11, wherein the capability information about the display device comprises at least one of: type information, capacity information, information about the number of cores and performance information, with respect to at least one processor included in the display device; and type information, capacity information and performance information, with respect to the memory included in the display device.

13. The method of claim 11 or 12, wherein the configuration method of the group service is determined as any one of: a device-based configuration method by which the display device generates the first avatar image corresponding to the first user image; and a server-based configuration method by which the server generates the first avatar image and the second avatar image corresponding to the user of the other display device connected to the group service.

14. The method of claim 13, wherein the obtaining of the first avatar image and the second avatar image comprises:
based on determination of the configuration method of the group service as the device-based configuration method, detecting the first user from the first user image and, based on tracking information about the first user, generating the first avatar image;
receiving at least one of the second avatar image and information about the second avatar image from the other display device; and
generating the second avatar image, based on reception of information about the second avatar image.

15. One or more computer-readable media storing a program that allows the method of any one of claims 11 to 14 to be performed.
